# EUROPEAN PATENT SPECIFICATION

(11) **EP 1 912 194 B1**
(45) Date of publication and mention of the grant of the patent: **20.11.2013**
(21) Application number: 05766241.3
(22) Date of filing: 20.07.2005
(51) Int. Cl.: G09B 23/30, A61C 13/09, G09B 23/28

(54) **MULTILAYERED MODEL TOOTH FOR DENTAL TRAINING**
MEHRSCHICHTIGER MODELLZAHN ZUM ZAHNMEDIZINISCHEN TRAINING
DENT MODÈLE MULTICOUCHE POUR APPRENTISSAGE DES SOINS DENTAIRES

(43) Date of publication of application: 16.04.2008
(73) Proprietor: Nissin Dental Products, Inc., Kyoto-shi, Kyoto 601-8469 (JP)
(72) Inventor: FUNAKOSHI, Satoru, Kyoto; 6210001 (JP); OSE, Kazuhisa, Kyoto; 6210001 (JP)
(74) Representative: Gritschneder, Martin
(86) International application number: PCT/JP2005/013323
(87) International publication number: WO 2007/010603

(56) References cited:
- DE-A1- 19 534 505
- JP-A- 5 241 498
- JP-A- 2003 038 527

## Description

### Backgroud of the Invention

### Field of the Invention

The present invention relates to a multilayered model tooth for dental training.

### Description of the Related Art

Conventionally, model teeth for dental training have been widely used in education fields such as dental universities and dental technician schools, and for example, they are described in the following patent documents.
Patent document 1: Japanese Laid-Open Patent Publication No. H05-241499 (241,499 of 1993)
Patent document 2: Japanese Laid-open Patent Publication No. H05-241500 (241,500 of 1993)

The multilayered model tooth for dental training described in Patent document 1, in which the materials are different between the surface layer of the crown part and the root part, is a model tooth having a cutting feeling similar to that of a natural tooth. The multilayered model tooth for dental training described in Patent document 2, in which the materials are different between the surface layer of the crown part and the surface layer of the root part, is a model tooth having a layer structure more similar to that of a natural tooth.

These model teeth have a multilayered structure similar to that of a natural tooth and reproduce the thickness of a natural tooth even in the enamel layer of the crown part. Accordingly, the thickness of the enamel layer of the crown part in the vicinity of the cervical line is as thin as around 0.1 mm to 0.5 mm, and the enamel layer further becomes gradually thinner toward the cervical line and disappears at the cervical line. By reproducing such multilayered structure of a natural tooth, the enamel layer of the crown part in the vicinity of the cervical line becomes thinner to have a sharp wedge shape at the cervical line. Accordingly, during cutting practice to remove the enamel layer in the vicinity of the cervical line in crown restoration training, there was a problem where the enamel layer in the vicinity of the cervical line chipped easily.

### Summary of the Invention

An object of the present invention is to provide a multilayered model tooth for dental training which reproduces a multilayered structure similar to that of a natural tooth, and having a crown part that is not chipped easily by cutting training such as crown restoration training.

That is, the multilayered model tooth for dental training of the invention is a multilayered model tooth for dental training including a crown part artificially produced by simulating an enamel layer as a surface layer and a dentin layer as an inner layer, and a root part. It is characterized in that the model tooth is fabricated in an unified manner such that the enamel layer is extended from the tip of the model tooth to the root part beyond the cervical line, and at least the adjacent area to the crown part and the surface of the root part in the vicinity of the adjacent part is covered with the enamel layer of the crown part.

Further, with respect to the invention of the multilayered model tooth for dental training having the above-mentioned characteristics, the invention is characterized in that the thickness of the enamel layer covering the root part surface on the cervical line is in the range of 0.02 mm to 0.3 mm.

In the case of the multilayered model tooth for dental training of the invention, since the model tooth has a structure fabricated in an unified manner such that the enamel layer is extended from the tip of the model tooth to the root part beyond the cervical line, and at least the adjacent area to the crown part and the surface of the root part in the vicinity of the adjacent part is covered with the enamel layer of the crown part, when the cutting training of the enamel layer of the crown part adjacent to the cervical part is carried out, chipping of the enamel layer can efficiently be prevented and training can be conducted successfully.

### Brief Description of the Drawings

Fig. 1A is a drawing showing one example of an outline of a model tooth for dental training of the invention, and Fig. 1B is a cross-sectional view showing its inner structure.
Fig. 2A is a drawing showing one example of an outline of a conventional model tooth for dental training, and Fig. 2B is a cross-sectional view showing its inner structure.

### Description of the Reference Numerals

1: Crown part
2: Root part
3: Enamel layer
4: Dentin layer
5: Surface layer of root part
6: Cervical line

### Detailed Description of the Invention

The multilayered model tooth for dental training of the invention includes a crown part artificially formed by simulating an enamel layer to be a surface layer, a dentin layer to be an inner layer and a root part unified with the crown part.

Just like a natural tooth of the human being, the crown part has a multilayered structure having an enamel layer on the surface and a dentin layer in the inside. The enamel layer is thickest at the tip of the model tooth and becomes gradually thinner toward the root part, and the thickness of the enamel layer in the vicinity of the cervical line, which is a boundary line of the root part and the crown part, is as thin as around 0.02 to 0.3 mm.

The enamel layer thinnest in the vicinity of the cervical line forms a root part surface layer on a portion of the root part adjacent to the crown part and also on a portion in the vicinity of the adjacent part. In this case, the enamel layer thinnest in the vicinity of the cervical line may be extended to the root part side while keeping the thickness or may be extended to the root part side while becoming gradually thicker or gradually thinner. If the thickness of the surface layer of the root part is too thin, the effectiveness of preventing cracking due to cutting of the enamel layer of the crown part diminishes, and if it is too thick, it results in a multilayered structure different from that of a natural tooth. Therefore, although the thickness and width may properly be selected in accordance with a desired model tooth shape, the surface layer thickness is about 0.02 to 0.3 mm and preferably about 0.05 mm to 0.2 mm. Herein, the portion of the root part adjacent to the crown part and the portion in the vicinity of the adjacent part has a range of up to about 5 mm from the cervical line of the root part in the root end direction and if this width is too narrow, the enamel layer of the crown part in the vicinity of the cervical line tends to crack. Therefore, the width of the surface layer of the root part is desirable to be 0.5 mm or wider, and more desirable to be 1 mm or wider. Although the surface layer of the root part is desirable to be formed on almost an entire circumference in the circumferential direction of the root part, the surface layer may be formed partially on the root part.

The enamel layer and the dentin layer forming the crown part may be formed using different materials or the same material. However, in terms of similarity of the cutting feeling to that of a natural tooth, it is desirable to use a harder material for the enamel layer than for the dentin layer.

Although the hardness of the enamel layer depends on the material used, in the case of using, for instance, a resin material as a base, it is desirable to use a material for the enamel layer that has a hardness of about 110 to 130 on the basis of the Rockwell M scale, (according to JIS-K6911) and to use a material for the dentin layer that has a hardness of about 70 to 110. Further, it is possible to achieve a cutting feeling more similar to that of a natural tooth by adjusting the hardness difference between the enamel layer and the dentin layer in a range of 10 to 60 and preferably 20 to 50 in terms of the above-mentioned hardness scale.

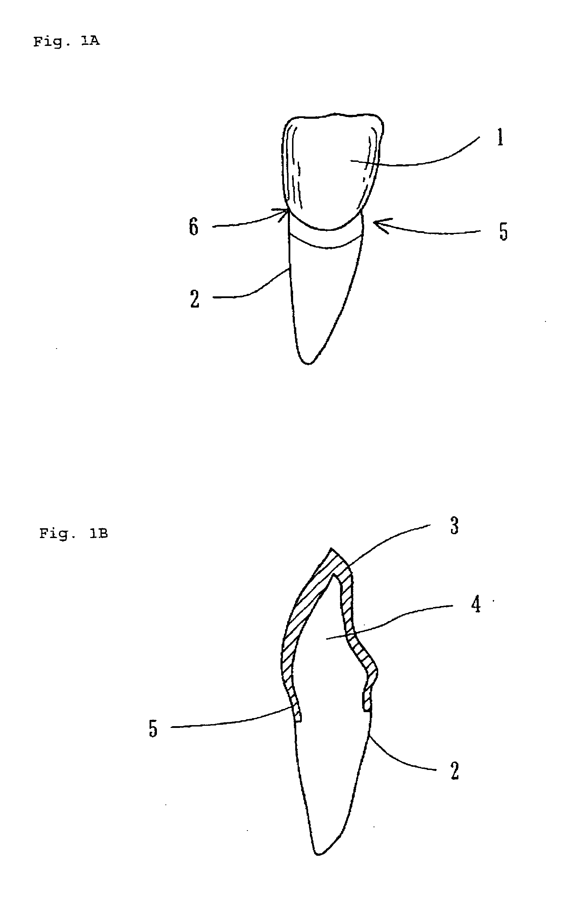

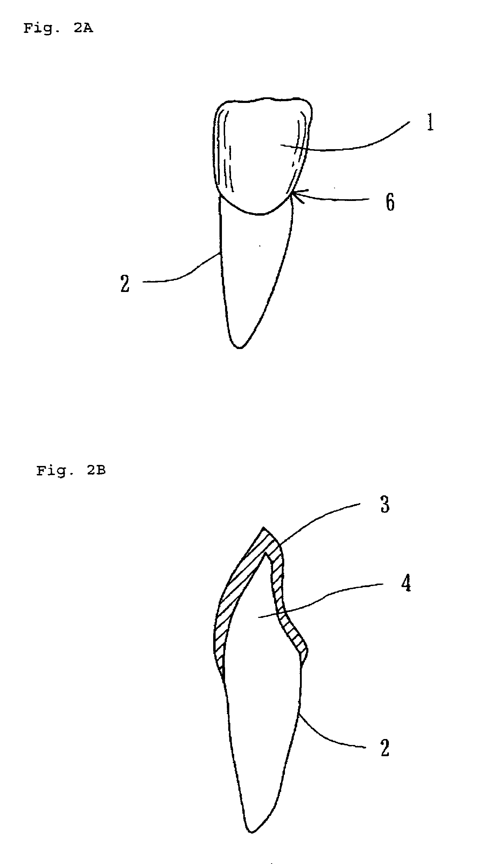

Hereinafter, the invention will be described using drawings. Fig. 1A is a drawing showing one example of an outline of a model tooth for dental training of the invention and Fig. 1B is a cross-sectional view showing its inner structure. Further, Fig. 2A is a drawing showing one example of an outline of a conventional model tooth for dental training and Fig. 2B is a cross-sectional view showing its inner structure.

As shown in Figs. 1A and 1B, the multilayered model tooth for dental training of the invention includes a crown part (1) artificially produced by simulating an enamel layer (3) to be a surface layer and a dentin layer (4) to be an inner layer and a root part (2), and the enamel layer (3) is extended from the tip of the model tooth to the root part (2) side beyond the cervical line (6) and at least the adjacent part to the crown part (1) and the surface of the root part (2) in the vicinity of the adjacent part is covered with the enamel layer (3) of the crown part (1) . In the present invention, the thickness of the enamel layer (a surface layer (5) of the root part) covering the root part surface on the cervical line (6) is in a range of 0.02 mm to 0.3 mm.

In the crown part (1), fine convexo-concave surface with an arithmetical mean deviation Ra of not less than 0.1 µm and less than 10 µm and preferably not less than 0.15 µm to about 5 µm may be formed on the surface to reflect a laser beam.

Further, dents simulating carious pits or cavities or discolored portions due to precipitation may be formed, or adhering matters simulating dental calculus may be formed on the surface part.

Further, discolored portions simulating carious pits may be formed in the boundary of the enamel layer (3) and the dentin layer (4), and dental pulp cavities may be formed on the inside of the dentin. The crown part (1) is connected to the root part (2), and can be set on a prescribed jaw model.

The structure of the root part (2) connected to and unified with the crown part (1) is not particularly limited to except the adjacent area to the crown part and the surface layer in the vicinity of the adjacent area, and the structure may be a monolayer structure or a multilayered structure and may be a structure having a plurality of dental roots similar to those of a natural tooth or a single root structure obtained by simplifying a natural tooth. Further, tooth pulp cavities and root canals simulating those of a natural tooth may be formed on the inside. A layer simulating a cement layer may also be formed on the surface layer other than the surface layer of the adjacent area of the crown part and in the vicinity of the adjacent area.

Raw materials to be used for such a model tooth may be commonly known materials and in the case of the enamel layer of the crown part, porcelains such as ceramics, synthetic resin materials such as acrylic, polystyrene, polycarbonate, polyester type thermoplastic resin materials and melamine, urea, unsaturated polyester, phenol, epoxy type thermosetting resin materials, polymerizable monomer materials such as trimethylolpropane trimethacrylate and dimethacryloxyethyltrimethylhexamethylene diurethane, and also mixtures of these main raw materials mixed with various kinds of reinforcing organic and inorganic fibers such as glass fibers, carbon fibers, pulp, synthetic resin fibers, various kinds of fillers such as talc, silica, mica, calcium carbonate, barium sulfate, alumina, glass powder, coloring agents such as pigments and dyes, and various kinds of additives such as weathering resistant agents and antistatic agents can be used.

Further, the above-mentioned various kinds of materials may be used for materials forming the dentin layer of the crown part and the root part.

Herein, to obtain a model tooth having a cutting feeling more similar to that of a natural tooth, it is preferable to use a hard material obtained by filling an inorganic material such as silica in the above-mentioned polymerizable monomer material for the enamel layer of the crown part, and use a material with a relatively low hardness containing an acrylic or melamine or epoxy material as a main raw material for the material of the dentin layer and the root part.

These materials are not particularly limited in terms of the color tone, however the materials may properly be adjusted to have a desired color tone. A toning technique is not particularly limited and the materials may be adjusted to a desired color tone by properly combining conventionally known various pigments and dyes.

A method for producing such a model tooth may be properly selected in accordance with the materials to be used, and for instance, in the case of using a synthetic resin as a main raw material, conventionally known techniques such as common injection molding and press molding can be employed.

Herein, a production method by a common injection molding process will be described.

First, raw materials to be the dentin layer and the root part are filled and solidified in an injection molding die for forming a shape in which the dentin layer and the root part are unified to fabricate a molded product, including the dentin layer and the root part unified with each other. Successively, after the molded product is set on a prescribed position in an injection molding die for forming the enamel layer form, a material to be the enamel layer is injected in the die to laminate and unify the enamel layer as an outer layer of the molded product including the dentin layer and the root part. At this time, if the root part form of the molded product to be set in the die for forming the enamel layer is made to form the above-mentioned surface layer, the material of the enamel layer can be filled and simultaneously the surface layer of the root part can be formed.

By the above-mentioned technique, the multilayered model tooth for dental training of the invention can easily be produced. However, the invention is not limited to this technique and it may be possible to form an enamel layer first and successively unify a dentin layer of a crown part and a root part, or it may also be possible to form a dentin layer and an enamel layer of the crown part by the above-mentioned injection molding method and thereafter, join and unify a separately formed root part to them, or it may also be possible to carve an enamel layer, a dentin layer, and a root part out of blocks of respective materials and join and unify them.

Herein, the description is made while referring to the drawings of an anterior tooth, however, the multilayered model tooth for dental training of the invention is not limited to an anterior tooth but the same effectiveness can be applied on a posterior tooth as well.

### Examples

### Example 1

An acrylic resin toned to a prescribed color tone was filled and solidified in a die having a form unifying an enamel layer, a dentin layer, and a root part to obtain a molded product including a dentin layer and a root part unified to each other. A formed product obtained by cutting and removing a portion to be the enamel layer and a portion to be the surface layer of the root part from the obtained molded product was again set in the die, and a material containing dimethacryloxyethyltrimethylhexamethylene diurethane and silica to be an enamel layer was filled and solidified to obtain a multilayered model tooth for dental training, including the dentin layer-root part and the enamel layer unified to each other. In this case, the thickness of the surface layer of the root part was adjusted to be 0.1 mm and the width (the distance from the cervical line in the root end direction) was adjusted to be about 2 mm.

Using the multilayered model tooth for dental training, training of cutting the enamel layer of the crown part in the vicinity of the cervical part was carried out, and as a result, the training was able to be carried out successfully without cracking the enamel layer.

### Example 2

Using a multilayered model tooth for dental training produced in the same manner as in Example 1, except that the thickness of the surface layer of the root part was changed to be 0.05 mm, training of cutting the enamel layer of the crown part in the vicinity of the cervical part was carried out, and as a result, the training was able to be carried out successfully without cracking the enamel layer.

### Comparative Example 1

Using a multilayered model tooth for dental training having a structure of a conventional multilayered model tooth for dental training as shown in Figs. 2A and 2B and produced in the same manner as in Example 1, except that no surface layer was formed on the root part, training of cutting the enamel layer of the crown part in the vicinity of the cervical part was carried out, and as a result, cracking occurred partially in the enamel layer and thus training was not able to be carried out successfully.

As mentioned above, the multilayered model tooth for dental training of the invention has a structure for preventing cracking of the enamel layer in training of cutting the enamel layer of a crown part in the vicinity of a cervical part and thus the model tooth is useful for conducting cutting training.

## Claims

1. A multilayered model tooth for dental training comprising a crown part (1) artificially produced by simulating an enamel layer (3) as a surface layer and a dentin layer (4) as an inner layer and a root part, (2) wherein the model tooth is fabricated in an unified manner such that the enamel layer (3) is extended from the tip of the model tooth to the root part (2) side beyond a cervical line(6) and a surface of the root part (2) adjacent to the crown part (1) is covered with the enamel layer (3) of the crown part (1) in a range of up to 5 mm from the cervical line (6).

2. The multilayered model tooth for dental training according to claim 1, wherein the thickness of the enamel layer (3) covering the root part (2) surface on the cervical line(6) is in the range of 0.02 mm to 0.3 mm.

## Patentansprüche

1. Mehrschichtiger Modellzahn zum zahnmedizinischen Training, umfassend einen Kronenteil (1), der durch Nachbildung einer Emaille-Schicht (3) als eine Oberflächenschicht und einer Dentinschicht (4) als eine innere Schicht künstlich hergestellt ist, und einen Wurzelteil (2), wobei der Modellzahn auf eine einheitliche Weise gefertigt ist, derart, dass die Emaille-Schicht (3) vom äußersten Ende des Modellzahns zur Wurzelteil(2)seite über eine zervikale Linie (6) hinaus ausgedehnt ist und eine an den Kronenteil (1) angrenzende Oberfläche des Wurzelteils (2) in einem Bereich von bis zu 5 mm von der zervikalen Linie (6) mit der Emaille-Schicht (3) des Kronenteils (1) bedeckt ist.

2. Mehrschichtiger Modellzahn zum zahnmedizinischen Training nach Anspruch 1, bei dem die Dicke der Emaille-Schicht (3), die die Wurzelteil(2)oberfläche auf der zervikalen Linie (6) bedeckt, im Bereich von 0,02 mm bis 0,3 mm liegt.

## Revendications

1. Dent modèle multicouches pour apprentissage des soins dentaires comprenant une partie de couronne (1) produite artificiellement en simulant une couche d'émail (3) comme couche de surface et une couche de dentine (4) comme couche interne et une partie de racine (2), la dent modèle étant fabriquée de manière unifiée de telle sorte que la couche d'émail (3) s'étende depuis la pointe de la dent modèle jusqu'au côté de la partie de racine (2) au-delà d'une ligne cervicale (6) et qu'une surface de la partie de racine (2) adjacente à la partie de couronne (1) soit couverte par la couche d'émail (3) de la partie de couronne (1) sur une distance de jusqu'à 5 mm depuis la ligne cervicale (6).

2. Dent modèle multicouches pour apprentissage des soins dentaires selon la revendication 1, dans laquelle l'épaisseur de la couche d'émail (3) couvrant la surface de la partie de racine (2) sur la ligne cervicale (6) est comprise dans la plage de 0,02 mm à 0,3 mm.
